# EUROPEAN PATENT APPLICATION

(11) **EP 4 755 648 A1**
(43) Date of publication of application: **10.06.2026**
(21) Application number: 24217245.0
(22) Date of filing: 03.12.2024
(51) Int. Cl.: B41J 11/00, C09D 11/02

(54) **INKJET PRINTING WITH USE OF SPECIALTY INKS**

(71) Applicant: Canon Production Printing Holding B.V., 5914 HH Venlo (NL)
(72) Inventor: KNECHTEN, Carolus A.M., Venlo (NL)
(74) Representative: Canon Production Printing IP Department

(57) **Abstract**

A method of printing on a print medium by an inkjet printer, the method comprising the steps of receiving a print job of a digital image to be printed on the print medium, receiving an identification of at least one part of the digital image to be printed on a corresponding part of the print medium for which a specialty ink is intended to be deposited which specialty ink is not available in the inkjet printer, printing the digital image together with a plurality of spaced apart, out-of-plane structures at the corresponding part of the print medium, applying an excess of the specialty ink to the printed structures, wiping off superfluous specialty ink so that the specialty ink only remains in-between the printed structures; and drying the printed medium.

## Description

### BACKGROUND OF THE INVENTION

### Field of the invention

The invention relates a method of printing on a print medium by an inkjet printer, the method comprising the steps of receiving a print job of a digital image to be printed on the print medium, and receiving an identification of at least one part of the digital image to be printed on a corresponding part of the print medium for which a specialty ink is intended to be deposited which specialty ink is not available in the inkjet printer.

With the wording "CMYK(Wj colours" the colours cyan, magenta, yellow, black and optionally white are meant respectively. Specialty inks are for example fluorescent inks, metallic inks with larger non-jettable particles, glow in the dark inks, glitter and ink with special colours which are not part of a normal print colour gamut. Specialty inks can be used in conjunction with regular CMYK(Wj inks. Specialty inks are usually opaque and have a large number of design and printing applications. Specialty inks create a unique visual effect like for example suede, reflective, puff, metallic or glow.

### Description of Background Art

Printing specialty inks is often not feasible, because ink development of specialty inks is very expensive with respect to the expected printing volume. Also, adding an extra print head and ink handling to an existing inkjet printer is expensive. Nowadays a method is known that a digital image is printed on an inkjet printer and afterwards is manually painted with specialty ink or manually stitched with patches of specialty ink on a part of the printed digital image which corresponds to the at least one part of the digital image that has been identified. A drawback of said method is that is a manual method which is not very accurate with respect to a position and borders of the specialty ink on the print medium.

### SUMMARY OF THE INVENTION

It is an object of the invention to provide an improved method of creating a print including parts with specialty ink.

In accordance with the present invention, a method of printing according to claim 1, an inkjet printer according to claim 6, and a computer program according to claim 7 are provided.

This method of inkjet printing allows for printing a surface on a print medium. The method comprises the steps of:
- receiving a print job of a digital image to be printed on the print medium,
- receiving an identification of at least one part of the digital image to be printed on a corresponding part of the print medium for which a specialty ink is intended to be deposited which specialty ink is not available in the inkjet printer,
- printing the digital image together with a plurality of spaced apart, out-of-plane structures at the corresponding part of the print medium,
- applying an excess of the specialty ink to the printed structures,
- wiping off superfluous specialty ink so that the specialty ink only remains in-between the printed structures, and
- drying the print medium.

The steps of applying an excess of the specialty ink to the printed structures and wiping off superfluous specialty ink may be performed manually by a user or operator or by a robotic device.

According to an embodiment the step of printing the plurality of spaced apart, out-of-plane structures comprises the sub-step of forming clusters of multiple drops by repeatedly depositing a further cluster of multiple drops of radiation curable marking material on each cluster of multiple drops and curing the further clusters of multiple drops, thereby adhering the further clusters of multiple drops to the cluster of multiple drops, wherein each repetition increases a height of the structures with respect to the print medium. A final height for the structures may be for example approximately 0.1 mm which is sufficient to keep the specialty ink between the printed structures and does not cost too much specialty ink. The final height may be within a range from 0.05 mm to 0.25 mm in order to accommodate a widest range of specialty inks.

According to an embodiment the method comprises the step of choosing a colour of the structures to be printed to have an approximately same colour on top of the structures as the colour of the specialty ink.

According to an embodiment the print medium is a matte print medium and the method comprises the step of printing surroundings of the corresponding part of the print medium with white ink in a gloss mode.

According to an embodiment the step of wiping off the superfluous specialty ink takes place outside of the corresponding part of the print medium and/or on top of the printed structures.

According to an embodiment the printed structures are low structures having a height within a range from 0.05 to 0.25 mm and preferable a height of 0.1 mm.

According to an embodiment the printed structures form walls or cups.

The present invention also relates to an inkjet printer comprising a translatable printhead carriage translatable over a medium support surface and comprising at least one printhead comprising nozzles for jetting droplet of UV curable marking material onto a print medium on the medium support surface, a curing station configured for emitting UV radiation for curing marking material on the print medium on the medium support surface, and a print controller configured to perform the method according to the present invention.

According to an embodiment the inkjet printer is a roll fed printer or a flatbed printer.

The present invention also relates to a non-transitory software medium comprising a computer program with instructions which, when the program is executed by a print controller of an inkjet printer, cause the computer to carry out the steps of the method of the present invention.

The present invention also relates to a print medium with a printed surface formed by performing the steps of the method according to the present invention.

Further scope of applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
- Fig. 1: is a schematic example of a scanning inkjet printer;
- Fig. 2: illustrate printing structures according to the invention;
- Figs. 3A - 3B: is an elucidation of the steps of the method according present invention;
- Fig. 4: is a flow diagram of the method according to the present invention; and
- Fig. 5: is a non-transitory software medium according to the invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

### Printing system

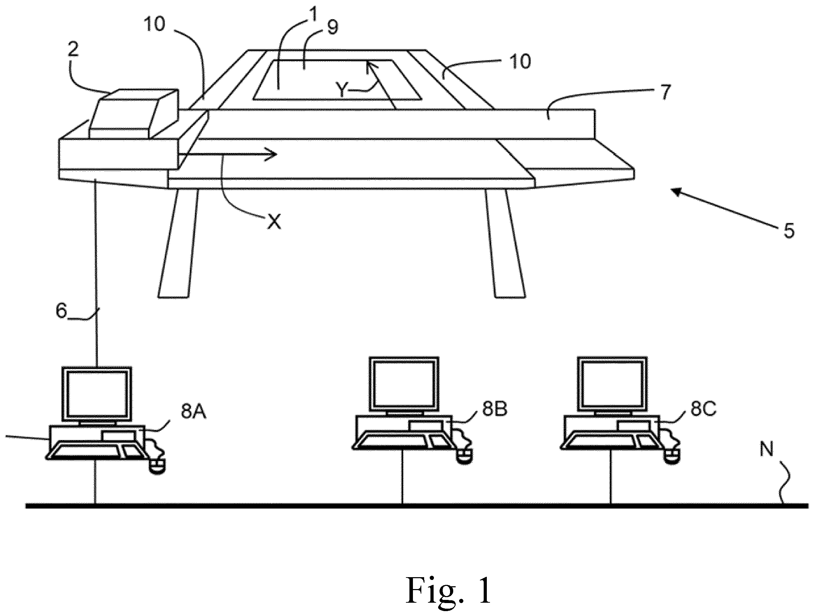

Fig. 1 is a print system 5 comprising a number of workstations 8B and 8C, which may be personal computers or other devices for preparing colour image data for three dimensional objects to be printed. These workstations have access to a network N for transferring the colour image data to a print controller 8A that is configured to receive print jobs for three-dimensional objects consisting of voxels and derive pass images for each pass of the print engine 2 over the print medium support surface 1 of the flatbed. A print medium 9 is supported on the print medium support surface 1 facing the print engine 2 during printing. The print system comprises the print engine 2 for applying colorants, in this embodiment cyan (C), magenta (M), yellow (Y), black (K) and white (W) colorant, to a flat print medium 9, the substrate, in order to obtain a printed object. In this embodiment a UV-curable material is applied by printheads that reciprocally scan the substrate in a movement direction X perpendicular to a transport direction Y by means of a gantry 7. A curing station is provided to solidify the marking material after printing on the substrate by exposing it to UV-radiation and/or UV light. The radiation preferably has a wavelength between or around 10 and 400 nm. Other types of marking materials or pre-treatment materials, such as primers, may further be applied within the present invention. It will further be appreciated that the present invention may be applied to any scanning inkjet printer, which includes a flatbed printer as shown in Fig. 1 as well as roll, web, sheet, rigid, and/or hybrid printers, wherein the print medium 9 is transported perpendicular to the scanning direction X, preferably between passes of the printheads. The print system 5 in Fig.1 is a flatbed printer. However, an UV curable inkjet roll fed printer may also be used to apply the method according to the present invention.

Preferentially the distance between the flat substrate and the print elements that are used to apply the various colorants, is variable. This distance may be varied in order to keep the upper surface of the object within the latitude of the print elements. The latitude of the distance between a substrate of the scanning printhead is in print engine 2 about 0.5 to 2 mm.

The printer comprises a user interface (not shown), which is placed on the print engine, but which may also be part of the printer controller 8A, for receiving a print job of a digital image to be printed on the print medium and for receiving an identification of at least one part of the digital image to be printed on a corresponding part of the print medium for which a specialty ink is intended to be deposited. The specialty ink itself is not available in the inkjet printer and has to be fetched from a storage elsewhere. By means of the user interface print job parameters and printing system parameters may be adapted, such as an absolute height parameter for indicating a maximum height of the structures to be printed. A maximum number of voxels in the height direction perpendicular to the substrate may be used as height parameter for the structures. A user interface may be provided as a network site that is accessible with a browser on a client computer.

After sending a print job comprising image data from a workstation to the printer controller, the print job will be made visible on the user interface. It may be scheduled for further processing after selection from a list of print jobs or, alternatively, if the print job is on top of the list of print jobs. The print job comprises parameter values that determine the way the image data are to be printed, such as the way how the image data are to be converted into print data.

### Inkjet printing of structures

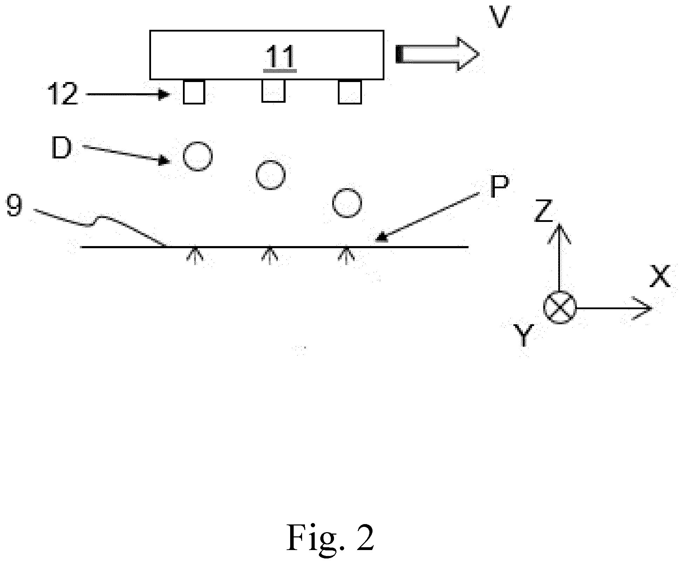

Fig. 2 illustrates a step of a method to print the structures on a print medium 9. The print medium 9 is supported on the print medium support surface 1, such that a side of the print medium 9 faces the nozzles 12 of the printhead 11 during printing. The print medium 9 may be any suitable type of material(s), such as paper, plastic or metal foils, banners, sheets, rigids, webs, textiles, etc.

In Fig. 2, the printhead 11 moves in its scanning direction X over the stationary print medium 9. The printhead 11 may be any suitable type of inkjet printhead, for example the printhead as described in US 10391768 B2. The nozzles 12 jet a plurality of droplets D of a UV-curable marking material onto the print medium 9 in order to form a cluster of drops. Each nozzle 12 is provided with a respective actuator (not shown) to jet a droplet D from said nozzle 12. Each actuator is controlled to jet its droplet D at a predetermined position P on the print medium 9. Therein, the relative position and velocity of each nozzle with respect to the respective position P has been taken into account. In Fig. 2, during this pass of the printhead 11 each nozzle 12 jets a droplet D, such that these droplets D are positioned at a non-zero distance from one another on the print medium 9. It will be appreciated that the print medium 9 in Fig. 2 may have been treated with (pre)printing or processing prior to the step shown in Fig. 2. For example, a primer and/or one or more initial layers of marking material may have been provided on the print medium 9 to provide a surface with suitable adhesion for the marking materials applied in Fig. 2.

After jetting, the clusters of droplets D form spaced apart structures-in-formation on the print medium 9 after deposition. The distance between the structures-in-formation is sufficiently great, so that coalescence of neighboring structures-in-formation is prevented. The space between the eventually printed structures is large enough to comprise amounts of specialty ink which are intended to be applied to the printed structured according to the present invention. It will be appreciated that one or more clusters of droplets D may be deposited per position P per pass of the printhead 11 to contribute to the respective drop for forming the respective structure-in-formation. Multiple droplets D deposited at the same position P during a single pass are deposited in close enough proximity, such that these coalesce together into a single drop. The jetted clusters of droplets D of marking material are exposed to radiation from a curing station. The radiation, in this example UV light, triggers a photochemical reaction in the jetted marking material, which results in the hardening and fixation of the jetted clusters of droplets D. This process is commonly referred to as 'curing'. The jetted clusters of droplets D were deposited directly on the print medium 9, so that by curing the jetted marking material the initial bases of the structures-in-formation are hardened and fixed to the print medium 9.

The printhead 11 passes over the print medium 9 during a second pass in the scanning direction X. The nozzles 12 are then activated again to jet further clusters of droplets D onto the cured, hardened bases of the structures-in-formation. Based on the velocity and relatively position of a nozzle 12 with respect to a position P, a release timing is determined at which moment a cluster of droplets D is released from a respective nozzle 12, so that said cluster of droplets D lands on the structure-in-formation at the intended position P. In a basic example, during every pass the relative position of a nozzle 12 with respect to the to be jetted position P is the same, while the velocity of the printhead 11 is kept constant. Corrections may be applied to compensate for the increasing height of the structures-in-formation. As such, one or more clusters of droplets D of UV-curable marking material are deposited on top of the bases of the structures-information. The amount of marking material deposited per position P, e.g. the number and/or (total) volume of droplets added per pass per structure-in-formation is preferably sufficiently small, so that the added marking material for its total or major part resides on top of the respective structure-in-formation. Thereby, the height of the structures-in-formation is increased incrementally.

Subsequently, the added marking material is cured by means of the curing station 14. The clusters of droplets D added on top of each structure-in-formation are hardened and fixed to the underlying bases, which were formed in Fig. 2. This process of adding one or more clusters of droplets D to the top of each structure-in-formation followed by curing the added marking material by means of UV radiation is then repeated a number of times to create low three-dimensional structures. The structures extend out-of-plane in the heigh direction Z with respect to the print medium 9 and are spaced apart from one another in a substantially contactless manner. It will be appreciated that when a large number of structures is applied in a dense manner, local deviations may lead to a small number of structures being in contact with one another. The structures provide space for applying specialty ink.

A precondition for this clustering is that it must be possible to place droplets sufficiently close together to create effective clustering into a single dot and increase height productivity. E.g. 300 dpi is too far away to create clusters and height productivity is actually decreased because some coalescence between neighbouring dots effectively increases ink spreading in that direction. At 600 dpi (and >20 pl clustered drops), clustering is possible, but the productivity increase is relatively small vs the increased ink use. At 900 dpi clustering becomes very effective.

Alternative shapes can also be made like ridges, walls, cups, or by printing bidirectionally: X/Y shapes, (inverted) triangles.

In an alternative embodiment large or even very large structures are created in one direction, usually the y direction. By doing so, wall like structures are created with another kind of visual experience.

### Printing method

The structures are formed by iteratively depositing clusters of multiple droplets D of a marking material on top of a structure-in-formation and curing the deposited marking material before adding the next cluster of drops. This requires that the clusters of drops are deposited precisely on top of the structures-in-formation. In a simple example this may be achieved by keeping the printhead 11 stationary to the print medium 9 with a narrow distance between. In another, more costs effective embodiment, the printhead 11 moves with respect to the print medium 9, such a relatively surface can be jetted by a single printhead 11. In a scanning inkjet printer 5, the printhead 11 moves reciprocally in the scanning direction X. Herein an example of a method for printing low structures on such a printer 1 will be described.

The process is initiated by the controller receiving print job information, which triggers the printer 5 to be operated in a structure printing mode when executing the corresponding print job. The print job information defines in any suitable format at least one location or area of the structures on the print medium 9, a height parameter for the structures (e.g. an average or maximum height in mm or µm), a marking material parameter (e.g. a colour). A standard density may be applied in case no specific density is prescribed by the print job information. It will be appreciated that multiple, different marking materials may be applied in combination to form a single structure, but the current example will be explained with reference to a single marking material. Processing the print job information results in the selection of a marking material. e.g. based on colour. In a preferred embodiment a colour of the structures to be printed is chosen to have an approximately same colour on top of the structures as the colour of the specialty ink. The controller may store a comprehensive look-up table which defines in each entry a colour to be jetted by the inkjet printer which resembles the colour of the specialty ink to be applied.

The controller has further stored for each marking material a droplet size parameter, corresponding to a volume of a droplet D of said marking material from a nozzle 12 of the printer 12. A value for the droplet size parameter may be determined by printing a structure in a predetermined number of passes and dividing the final height of the structure by the number of passes and/or by measuring the drop volume or dimensions. The droplet size may vary dependent on other print process parameters, such as jetting speeds, temperature, etc.

The controller has further stored for each marking material a cluster size parameter, corresponding to a number of droplets D in a cluster of said marking material from at least one nozzle 12 of the printer 12. A value for the cluster size parameter may be determined by printing a structure in a predetermined number of passes and dividing the final height of the structure by the number of passes and/or by measuring the drop volume or dimensions. The cluster size may vary dependent on other print process parameters, such as jetting speeds, temperature, etc. The controller may store a comprehensive look-up table which defines droplet height, cluster sizes, droplet sizes, a distance between the clusters and/or volumes across a variety of print process parameters. Additional, a cross-sectional dimension parameter for the structures S is determined or selected, for example a cross-sectional area or diameter measured perpendicular to the direction in which the height H is measured. The print job information may define a cross-sectional dimension parameter or the cross-sectional dimension parameter may follow from other process parameters. In the latter case, the cross-sectional dimension parameter may correspond to the area formed by a cluster of droplets D on the surface of the print medium 9, which has been previously determined and stored on the controller's memory.

The droplet size parameter in combination with the cluster size parameter is then compared to the height parameter to determine the number of passes of the printhead 11 for forming the structure S with the height H corresponding to the height parameter. Optionally, the controller may determine a number of individual droplets D which are deposited per pass onto a structure-in-formation S to together form a cluster of drops. In this example, a single cluster of droplets D will be jetted onto each structure-in-formation S during each pass (so each cluster of drops corresponds to a single cluster). The number of passes may then be determined by dividing the height H by a cluster height derived from the droplet volume and the cluster size or by calculating the volume of a structure using the cross-sectional dimension and height parameters and comparing that to the droplet size parameter and cluster size parameter. The determined number of passes is rounded to an integer value.

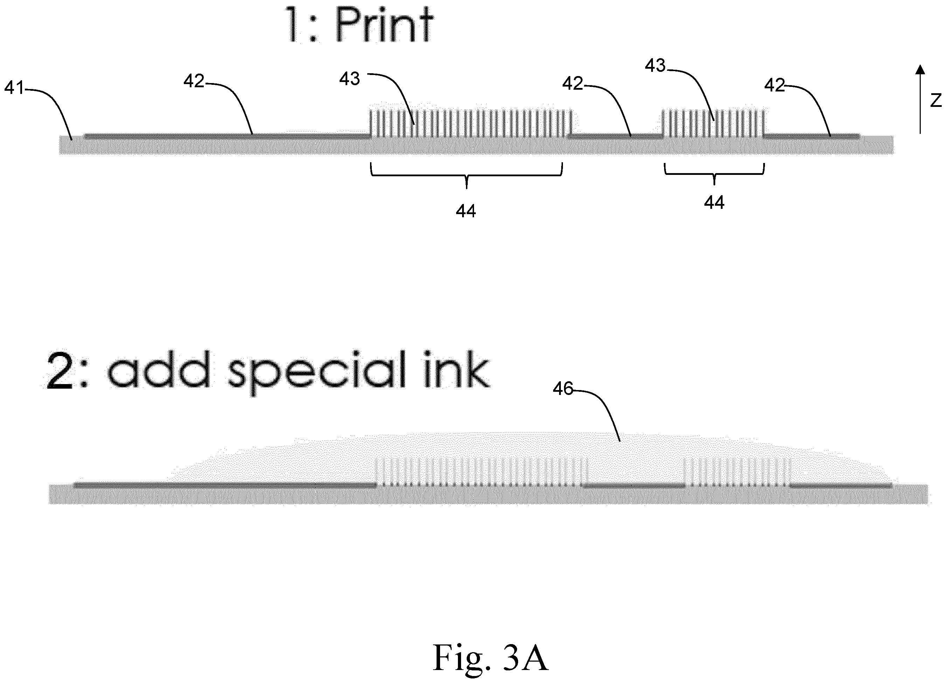

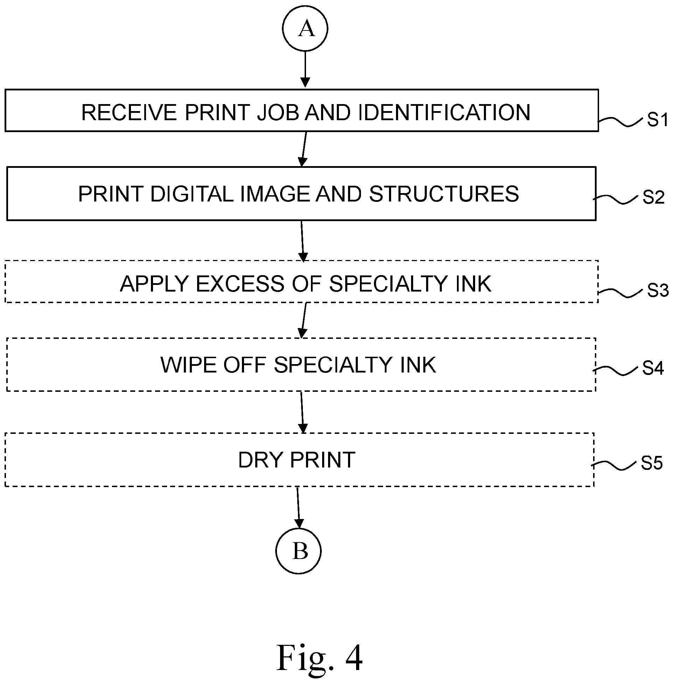

Fig. 4 shows an embodiment of the method according to the present invention in combination with Figs. 3A - 3B for further elucidation.

The method starts in a starting point A which leads to a first step S1.

In the first step S1 a print job of a digital image is received to be printed on the print medium. Also an identification is received of at least one part of the digital image to be printed on a corresponding part of the print medium for which a specialty ink is intended to be deposited which specialty ink is not available in the inkjet printer. The identification may be part of the print job.

In a second step S2 the digital image 42 is 1 printed together with the plurality of spaced apart, out-of-plane structures 43 at the corresponding part(s) 44 of the print medium 41. The inventor has realized good results with UV gelling ink in combination with immediate curing with which tiny structures can be printed. Preferably tiny walls are printed locally, thus realizing 'cups'. A square structure may be realized but any other convex form may be envisioned for the structures to be printed. The digital image 41 is 2D printed as shown in Fig. 3A. For convenience reasons the height of the structures 43 in the Z direction in Fig. 3A has been exaggerated compared to the height of the 2D printed digital image 42. In Figs. 3A - 3B the structures are shown as columns in the Z direction. However, it is to be understood that the structures are extended perpendicular to the pictures of Figs. 3A - 3B in order to form walls and/or cups and the like.

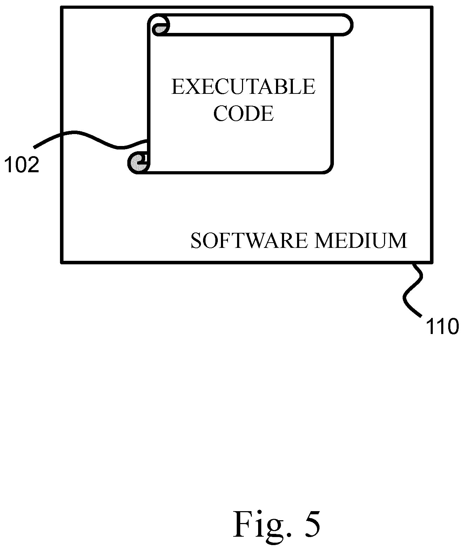

A third step S3, a fourth step S4 and a fifth step S5 are not executed by the printer as indicated in Fig. 5 by the dashed rectangles of the steps S3, S4 and S5.

In the third step S3 an excess of the specialty ink 46 is 2 applied to the printed structures 43 after the print is finished in the second step S2. An operator or a robotic device may 2 apply a small excess of a specialty ink 46 which fills the space between the structures 43, for example the cups, 1 printed in the second step S2. The colour of the structures 43 is preferably chosen to match the colour of the specialty ink 46 in order to camouflage the structures 43. For visibility and educational reasons the colour of the structures 43 in Fig. 3A - 3B deviates from the colour of the specialty ink 46 in Fig. 3A - 3B.

In the fourth step S4 superfluous specialty ink 46 is 3 wiped off so that the specialty ink 46 only remains in-between the printed structures 43. The operator or a robotic device 3 wipes over structures 43, and 3 wipes away the specialty ink 46 that is outside of the structures 43. On glossy or coated media, the 3 wipe-off step S4 works the best. On more porous media, the surroundings of the structures 43 may be printed with white in gloss mode, to make it easier to 3 wipe off the excess of specialty ink 46. When the image around the structures 43 does not contain image data, some white ink may be printed around the structures 43 to seal the surroundings of the structures 43 and make it easier to 3 wipe the excess of special ink off.

In this way, the print now has a specialty ink applied locally. The specialty ink has much less strict requirements because it doesn't have to be jetted via a print head, but it can still be applied digitally since the digital image determines at which locations the specialty ink must be applied. The ink development for the printer is limited to CMYK(Wj and is hence much cheaper than developing and facilitating additional (specialty) inks. By doing so, a wide range of specialty inks is possible to be applied since the ink does not need to be jetted. Another advantage is that the printer does not need an additional inkjet print head or inkjet handling in the print engine.

In a fifth step S5 the print is 4 dried. 4 Drying may be done to the air or be means of a blow dryer. Drying may for example be executed by an operator or by a robotic device. The drying method may depend on the kind of specialty ink.

The method ends in an end point B.

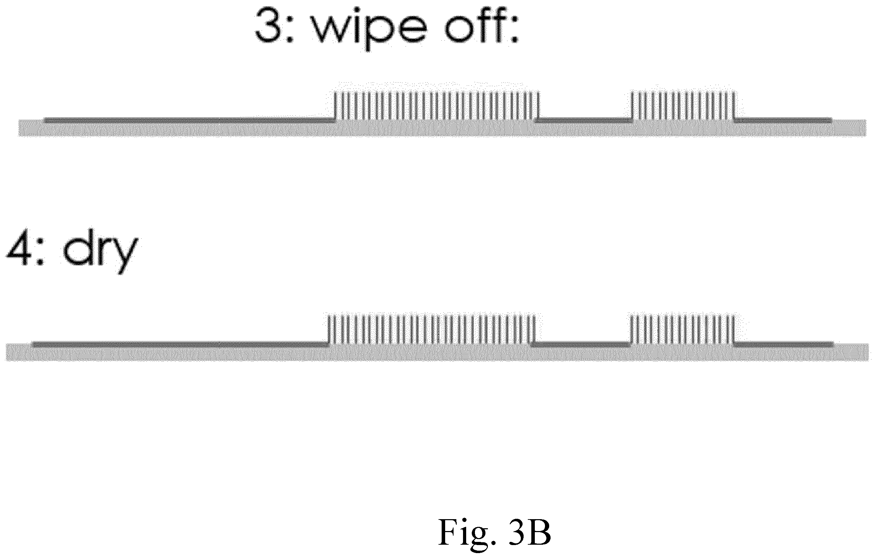

Fig. 5 schematically shows a non-transitory software medium 110 according to the invention. The software medium 110 comprises executable code 102 configured to, when executed, perform the method according to the invention, e.g. as described with respect to either the printer shown in Fig. 1 or the method shown in Figs. 3A, 3B, 4 and/or according to any of the variants and modifications of the printer and/or of the method described hereinbefore.

The non-transitory software medium 110 may, specifically, be formed as a CD or a CD-ROM, a DVD or a DVD-ROM, a Blu Ray disc or a Blu Ray-ROM disc, a magnetic hard drive, a solid state disk (SSD) hard drive, a USB memory device and so on.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A method of printing on a print medium by an inkjet printer, the method comprising the steps of:
- receiving a print job of a digital image to be printed on the print medium,
- receiving an identification of at least one part of the digital image to be printed on a corresponding part of the print medium for which a specialty ink is intended to be deposited which specialty ink is not available in the inkjet printer,
- printing the digital image together with a plurality of spaced apart, out-of-plane structures at the corresponding part of the print medium,
- applying an excess of the specialty ink to the printed structures,
- wiping off superfluous specialty ink so that the specialty ink only remains in-between the printed structures, and
- drying the print medium.

2. The method according to claim 1, wherein the step of printing the plurality of spaced apart, out-of-plane structures comprises the sub-step of forming clusters of multiple drops by repeatedly depositing a further cluster of multiple drops of radiation curable marking material on each cluster of multiple drops and curing the further clusters of multiple drops, thereby adhering the further clusters of multiple drops to the cluster of multiple drops, wherein each repetition increases a height of the structures with respect to the print medium.

3. The method according to claim 1 or 2, wherein the method comprises the step of choosing a colour of the structures to be printed to have an approximately same colour on top of the structures as the colour of the specialty ink.

4. The method according to any of the preceding claims, wherein the print medium is a matte print medium and the method comprises the step of printing surroundings of the corresponding part of the print medium with white ink in a gloss mode.

5. The method according to any of the preceding claims, wherein the step of wiping off the superfluous specialty ink takes place outside of the corresponding part of the print medium and/or on top of the printed structures.

6. The method according to any of the preceding claims, wherein the printed structures are low structures with a height within a range from 0.05 to 0.25 mm and preferably a height of 0.1 mm.

7. The method according to any of the preceding claims, wherein the printed structures form walls or cups.

8. An inkjet printer comprising:
- a translatable printhead carriage (2) translatable over a medium support surface (10) and comprising at least one printhead (11) comprising nozzles (12, 12A-12E) for jetting droplet of UV curable marking material onto a print medium (9) on the medium support surface (10);
- a curing station (14) configured for emitting UV radiation for curing marking material on the print medium (9) on the medium support surface (10); and
- a print controller configured to perform the method according to any of the preceding claims.

9. An inkjet printer according to claim 8, wherein the inkjet printer is a roll fed printer or a flatbed printer.

10. A non-transitory software medium comprising a computer program with instructions which, when the program is executed by a print controller of an inkjet printer, cause the computer to carry out the steps of the method of any of the claims 1 to 7.

11. A print medium with a printed surface formed by performing the steps of the method according to any of the claims 1 to 7.
